# EUROPEAN PATENT SPECIFICATION

(11) **EP 2 733 367 B1**
(45) Date of publication and mention of the grant of the patent: **19.10.2016**
(21) Application number: 13191519.1
(22) Date of filing: 05.11.2013
(51) Int. Cl.: F16B 33/00, F16B 43/00

(54) **Non-permanent, corrosion-resistant joining devices, and production method thereof**
Nicht dauerhafte, korrosionsbeständige Verbindungsvorrichtungen und Herstellungsverfahren dafür
Dispositifs d'assemblage non permanent résistant à la corrosion et leur procédé de production

(30) Priority: 19.11.2012 IT MI20121961
(43) Date of publication of application: 21.05.2014
(73) Proprietor: A. AGRATI S.p.A., 20837 Veduggio con Colzano-Monza Brianza (IT)
(72) Inventor: Villa, Matteo, 20837 Veduggio con Colzano-Monza Brianza (IT)
(74) Representative: Martegani, Franco

(56) References cited:
- WO-A1-92/18668
- DE-C1- 19 829 354
- US-A1- 2010 047 037
- US-A1- 2010 143 076

## Description

The present invention relates to non-permanent, corrosion-resistant joining devices and the production method thereof.

D1 = US-A-2010/0143076 discloses a metal annular gasket comprising a compound layer integrally laminated on upper and lower surfaces of an annular metal base plate, and an annular seal layer which covers the inner circumferential edge of the annular metal plate and the inner circumferential edge part of both compound layers.

In the field for the production of structural elements, the use on the part of designers of new composite materials and the joining of the same, is increasing. Designers are in fact continuously looking for greater structural resistance and chemical and thermal inertia, with a contemporaneous lightening of the structures.

Many attempts have been made over the last few years at finding a solution to the problem.

Various kinds of glues are currently adopted for producing joints of structural elements of this type, which are interposed between the surfaces to be joined. These glues are suitable for effecting a permanent fixing and are directly functional with respect to the specific operating conditions and nature of the assembled materials to be held together.

Not all fields and applications can resort to the use of glues for permanent fixing.

This important restriction is also aggravated by a limitation of the gluing design which could cause structural failures due to:
- over-tensioning due to hyperstaticity of the structure or poor alignment of the parts,
- unexpected operating conditions, or more severe than previously predicted,
- not completely known responses of the materials joined and glues used (poor chemical compatibility, for example, or sensitivity to environmental aggression such as humidity, UV rays or thermal damage) as they are associated with specific operating conditions.

In addition, with respect to the joining of structural elements, the use of glues often requires a careful and costly preparation of the facing surfaces, with lengthy and critical laying times. All of this is evidently hindered by the costs deriving from the above-mentioned operations to provide a correct joint required by the specific conditions of use.

The production of permanent and/or glued joints also has significant problems for their management. It should also be remembered that it is often difficult to inspect the joining flaps of glued structures as these are frequently hidden by the glue and not directly visible to whoever is carrying out the inspection. It is therefore impossible to control the correct installation and effect operations and maintenance interventions even on the single structural elements.

There is undeniably the objective difficulty in removing more or less internal parts blocked by the permanent joint thus obtained, when it is necessary to intervene on elements held by the joint which have to be repaired or substituted.

It is therefore equally important, within the same project context (for structural requirements), to envisage non-permanent joints between different materials, for example through the use of fixing elements or metal fasteners. It should be seriously taken into account that the use of non-permanent joining elements is often indispensable due to other requirements which are not strictly structural, such as for example having to fix components suitable for insulation or for electric/thermal conductivity, vibration dampers and the like.

It has now become evident that one of the fundamental aspects which must be taken into consideration by the designer when different materials are combined, is the probable triggering of corrosion mechanisms due to galvanic contact.

The electrochemical processes involved lead to the progressive damaging of the components or structural elements joined or even the joining element, with the consequent risk of structural failure. One of the most critical examples of non-permanent joints potentially subject to the corrosion mechanism by contact, relates to the connection of structures made of composite materials reinforced with carbon fibres.

A general objective of the present invention is to solve the above-mentioned drawbacks of the known art in an extremely simple, economical and particularly functional manner.

Another objective of the present invention is to avoid all problems of corrosion due to galvanic contact of the non-permanent joints obtained between different materials.

A further objective of the present invention is to provide devices and methods for non-permanent joints which can be easily adapted to the requirements of the designer. In particular, for non-permanent joining elements with different geometries, dimensions, materials, mechanical characteristics and coatings.

Yet another objective of the present invention is to provide devices and methods for non-permanent joints capable of suitably protecting directly facing surfaces in the same joints.

In view of the above objectives, according to the present invention, non-permanent, corrosion-resistant joining devices have been conceived, together with their production methods, having the characteristics indicated in the enclosed claims.

The characteristics of the present invention and its advantages with respect to the known art will be even more evident from the following description, referring to the enclosed drawings which, inter alia, show a scheme of an embodiment of non-permanent, corrosion-resistant joining devices produced according to the same invention. In the drawings:
- figure 1 shows (a schematic section of) a screw with which a washer is associated, produced according to the present invention;
- figure 2 shows (in section) an enlarged detail K of what is illustrated in the previous figure 1;
- figure 3 shows (a schematic section of) a screw which is not according to the present invention;
- figure 4 shows (in section) an enlarged detail H of the screw illustrated in the previous figure 3.

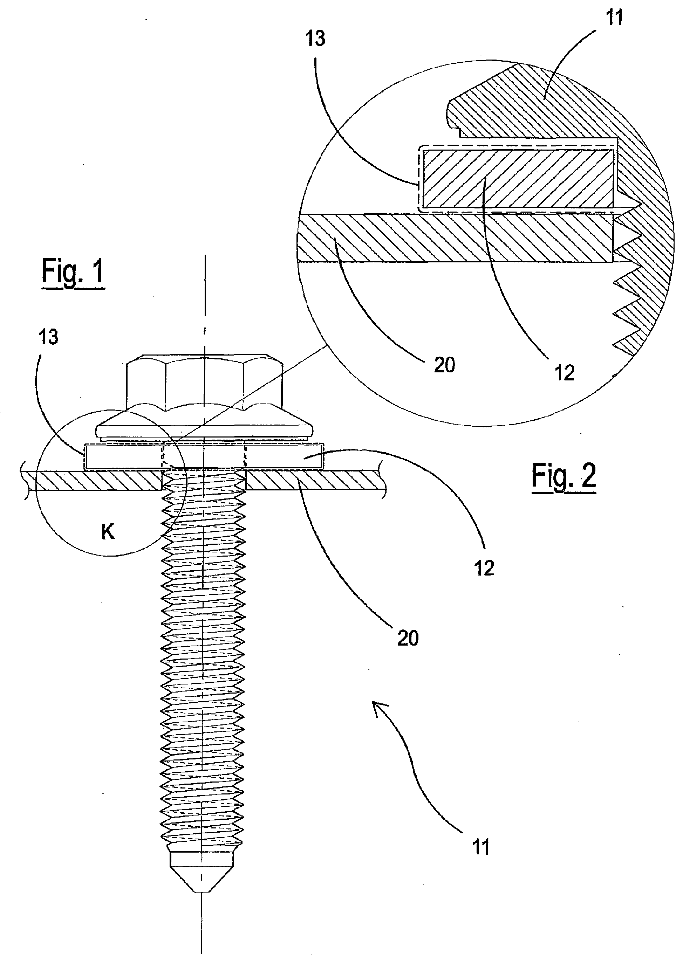

With reference to figures 1 and 2, these show a screw 11 with which a washer 12 is associated, produced according to the present invention. In particular, this washer 12 is produced by coating the outer surface of the washer 12 with a prepreg E-Glass + epoxy resin film 13.

This material is made of fiber-glass fabric preimpregnated with epoxy resin.

This arrangement according to the present invention avoids all problems of corrosion due to galvanic contact typical of non-permanent joints obtained between dissimilar materials.

The arrangement of a coating material of this kind, eliminates the necessity of ennobling the components against the corrosion process of the joining element, which remains that normally adopted without any additional expense.

With the solution presented herein, the electric insulation of the parts in contact, necessary for preventing the consequent corrosion process, is guaranteed by the direct and durable application on the non-permanent joining element of one or more films 13 of prepreg E-Glass + epoxy resin.

The washer 12, which is movable with respect to the screw 11, can be made unlosable with respect to the screw 11 itself.

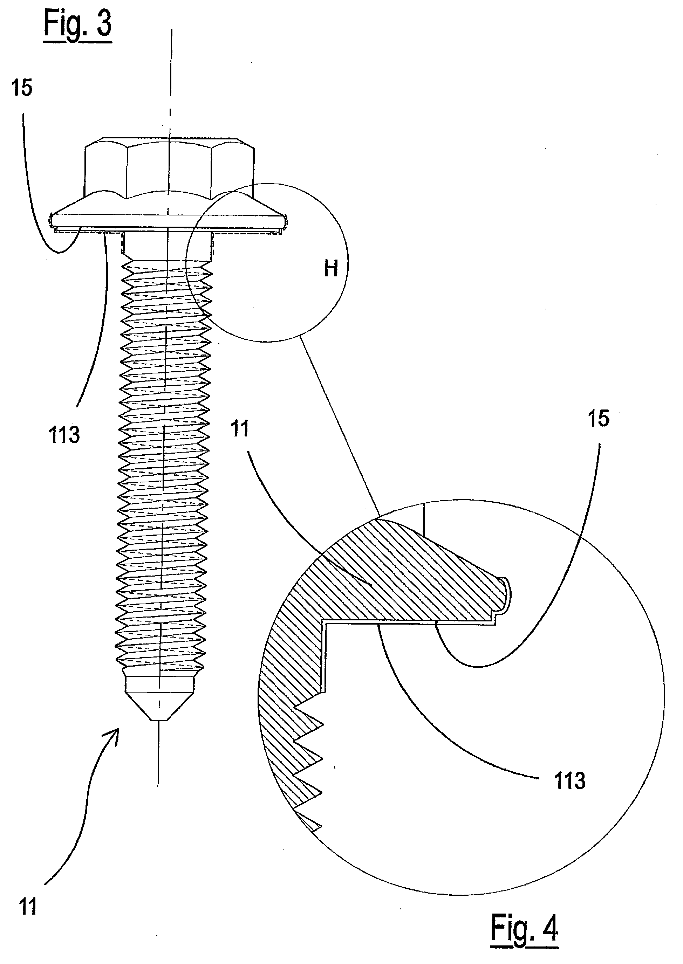

Figures 3 and 4 show how, as an alternative, the film can be applied directly to the specific joining element, such as a screw, a washer, etc.. For this purpose, when using a joining screw 11, for example, a prepreg film 113 must be suitably shaped and then adhered onto a part of the surface 15 of the screw 11 (underhead of the screw) which is to be protected and insulated with respect to the other parts of the whole joint, as shown in figures 3 and 4.

The new and inventive solution described herein can be distinguished by a series of characteristics:
- efficacy and systematicity in avoiding the corrosion process by contact, which can be obtained thanks to a careful and adequate design of the application on the non-permanent joining element;
- applicability on the final product;
- localized and durable application on the joining element;
- application with a uniform and continuous thickness on the portion of interest;
- application with an irrelevant increase in the original weight of the joining element (for example, the ratio between steel density:prepreg is about 7.7:1);
- it does not interfere in the calculations of the designer of the joint nor does it restrict him to forced choices;
- easy adaptability to the various requirements of the designer, for non-permanent joining elements with different geometries, dimensions, materials, mechanical characteristics and coatings;
- the mechanical resistance to the joint is not disturbed;
- the resistance to intrinsic corrosion of the coating of the joining element is not disturbed;
- it does not have to be used with noble materials, with consequent economy;
- the aesthetical appearance of the joint is not disturbed.

All the most important features forming part of the present invention, can be found in these non-limiting examples.

The objective indicated in the preamble of the description has therefore been achieved.

The forms of the structures for the embodiment of the invention, as also the materials and assembly modes, can obviously differ from those shown for purely illustrative and non-limiting purposes in the drawings.

The protection scope of the present invention is therefore delimited by the enclosed claims.

## Claims

1. Non-permanent, corrosion-resistant joining assembly, comprising a film of prepreg E-Glass and epoxy resin (13, 113) on at least a part (15) of a surface of an element of a joint (11, 12) facing a structural element (20) made of at least one composite material
**characterized in that**
said joining device is a washer (12) which external surface is entirely covered by a film of prepreg E-Glass and epoxy resin.

2. A method for the production of a non-permanent, corrosion-resistant joining assembly according the previous claim, **characterized in that** it covers at least a part (15) of a surface of an element of a joint (11, 12) facing a structural element (20) made of at least one composite material with at least a film of prepreg E-Glass and epoxy resin (13, 113).

## Patentansprüche

1. Nichtpermanente, korrosionsbeständige Verbindungsbaugruppe mit einem Film aus Prepreg-E-Glas und Epoxydharz (13, 113) an zumindest einem Teil (15) einer Fläche eines Elements einer Verbindung (11, 12), die zu einem Bauelement (20) weist, das aus zumindest einem Verbundmaterial hergestellt ist,
**dadurch gekennzeichnet, dass**
die Verbindungsvorrichtung eine Unterlegscheibe (12) ist, deren Außenfläche vollständig durch einen Film aus Prepreg-E-Glas und Epoxydharz bedeckt ist.

2. Verfahren für die Erzeugung einer nichtpermanenten, korrosionsbeständigen Verbindungsbaugruppe nach dem vorhergehenden Anspruch, **dadurch gekennzeichnet, dass** zumindest ein Teil (15) einer Fläche eines Elements einer Verbindung (11, 12), die zu einem Bauelement (20) weist, das aus zumindest einem Verbundmaterial hergestellt ist, mit zumindest einem Film aus Prepreg-E-Glas und Epoxydharz (13, 113) bedeckt wird.

## Revendications

1. Système d'assemblage non permanent, résistant à la corrosion, comportant un film de préimprégné de tissu de fibre verre E-Glass et de résine époxy (13, 113) sur au moins une partie (15) d'une surface d'un élément d'un assemblage (11, 12) en regard d'un élément de construction (20) fait d'au moins un matériau composite, **caractérisé en ce que**
ledit système d'assemblage est une rondelle (12) dont la surface extérieure est entièrement recouverte par un film de préimprégné de tissu de fibre verre E-Glass et de résine époxy.

2. Procédé pour fabriquer un système d'assemblage non permanent, résistant à la corrosion selon la revendication précédente, **caractérisé en ce qu'**il recouvre, avec au moins un film de préimprégné de tissu de fibre verre E-Glass et de résine époxy (13, 113), au moins une partie (15) d'une surface d'un élément d'un assemblage (11, 12) en regard d'un élément de construction (20) fait d'au moins un matériau composite.
